# EUROPÄISCHE PATENTANMELDUNG

(11) **EP 4 177 142 A1**
(43) Veröffentlichungstag der Anmeldung: **10.05.2023**
(21) Anmeldenummer: 22020535.5
(22) Anmeldetag: 07.11.2022
(51) Int. Cl.: B62K 5/01, B62K 5/027, B62K 5/05, B62K 5/06, B62K 5/08, B62K 7/04, B62D 33/04, B62D 51/02, B62D 61/06, B60K 7/00

(54) **LASTENFAHRZEUG**

(30) Priorität: 05.11.2021 AT 10721 U
(71) Anmelder: Jumug Vehicles GmbH, 1110 Wien (AT)
(72) Erfinder: Stalleker, Stefan, A-2424 Zurndorf (AT)
(74) Vertreter: Keschmann, Marc

(57) **Zusammenfassung**

Lastenfahrzeug (1) umfassend einen Fahrzeugrahmen (8), der in seinem vorderen Bereich einen Fahrerstand mit einer Standplattform (2) und einer Lenkvorrichtung und in seinem hinteren Bereich einen Transportcontainer (4) trägt, und wenigstens drei Räder (6,9), von denen wenigstens eines von einem elektrischen Motor, vorzugsweise Radnabenmotor (10), angetrieben ist, wobei die zwischen dem Fahrzeugrahmen (8) und einer Radaufstandsfläche gemessene Bodenfreiheit höchstens 250mm, bevorzugt höchstens 200mm, beträgt und wobei die Fahrzeuglänge weniger als 2.600mm, bevorzugt weniger als 2.200mm beträgt und der Transportcontainer (4) wenigstens 50%, bevorzugt wenigstens 60% der Fahrzeuglänge einnimmt.

## Beschreibung

Lastenfahrzeuge werden eingesetzt, um Waren- und Posttransporte sowie ggf. Personen- und Gütertransporte zu bewerkstelligen und sind mit einem Transportcontainer ausgestattet, der das zu transportierenden Transportgut aufnimmt. Im Zuge der Ökologisierung von Warentransporten ist man in letzter Zeit dazu übergegangen, die Anlieferung von Warensendungen im urbanen Bereich mit kleinen Lastenfahrzeugen durchzuführen, die mit Muskelkraft angetrieben werden. Bei Lastenfahrrädern wird das Treten oftmals durch einen Elektroantrieb unterstützt. Es sind aber auch verschiedenste Bauarten von Kleinfahrzeugen bekannt geworden, die ausschließlich elektrisch angetrieben werden. Solche Kleinfahrzeuge sind dazu ausgelegt, Fahrradwege benützen zu können, sodass Warenanlieferungen schneller und flexibler bis an die Haustüre des Empfängers erfolgen können.

Auf Grund des durch den Internethandel laufend zunehmenden Paketversands stellt die sog. letzte Meile in der Transport-und Logistikbranche insbesondere im urbanen Bereich insofern eine Herausforderung dar, als Pakete mit geringem Aufwand hinsichtlich Personaleinsatz, Lieferzeiten, Transportwegen, und Kosten, mit geringem Platzbedarf, Parkplatzraum und Schadstoffausstoß, sicher und schnell verteilt werden sollen.

Die vorliegende Erfindung zielt daher darauf ab, ein Lastenfahrzeug zu schaffen, mit dem der letzte Teil des Transports zur Haustür des Kunden effizient, kostengünstig und klimaneutral bewerkstelligt werden kann.

Zur Lösung dieser Aufgabe sieht die Erfindung ein Lastenfahrzeug vor, umfassend
einen Fahrzeugrahmen, der in seinem vorderen Bereich einen Fahrerstand mit einer Standplattform und einer Lenkvorrichtung und in seinem hinteren Bereich einen Transportcontainer trägt, und
wenigstens drei Räder, von denen wenigstens eines von einem elektrischen Motor, vorzugsweise Radnabenmotor, angetrieben ist,
wobei die zwischen dem Fahrzeugrahmen und einer Radaufstandsfläche gemessene Bodenfreiheit höchstens 250mm, bevorzugt höchstens 200mm beträgt und
wobei die Fahrzeuglänge weniger als 2.600mm, bevorzugt weniger als 2.200mm beträgt und der Transportcontainer wenigstens 50%, bevorzugt wenigstens 60% der Fahrzeuglänge einnimmt.

Die Kombination der erfindungsgemäßen Merkmale stellt ein Fahrzeug bereit, das bei kleinen Abmessungen ein hohes Ladevolumen hat und dessen Fahrverhalten optimiert ist. Insbesondere sorgt die geringe Bodenfreiheit von höchstens 250mm, vorzugsweise höchstens 200mm, für einen tiefen Schwerpunkt, sodass das Fahrzeug auch bei großer Zuladung eine hohe Kippstabilität und eine gute Kurvengängigkeit bzw. Kurvenstabilität aufweist. Dadurch, dass der Fahrzugrahmen in geringem Abstand über dem Boden liegt, kann der im vorderen Bereich des Rahmens angeordnete Fahrerstand vom Fahrer mühelos und rasch bestiegen werden, wobei die Standplattform bevorzugt von beiden Fahrzeugseiten frei besteigbar ist. Bevorzugt ist die Standplattform des Fahrerstandes in einem Abstand von höchstens 300mm von der Radaufstandsfläche angeordnet. Der niedrige Einstieg erleichtert ein häufiges "hop-on" und "hop-off". Insbesondere erfordert das Auf- und Absteigen auf bzw. von der Standplattform kein Übersteigen von Rahmenteilen, Rädern, Stangen und dgl. Bevorzugt ist im Mittelteil der Standplattform keine störenden Elemente, wie Mitteltunnel, Rahmenstreben, Oberrohre, Kurbelachsen oder dgl. Angeordnet.

Dadurch, dass der Fahrer das Fahrzeug ähnlich eines Elektroscooters im Stehen fahren kann, wird der Platzbedarf für den Fahrerstand minimiert, wobei der Großteil der Fahrzeuglänge für die Anordnung des Transportcontainers genutzt werden kann. Durch den Verzicht auf einen Tretkurbelantrieb kann der Abstand zwischen der Lenkvorrichtung, insbesondere einem Lenkerbügel, und dem Fahrer bzw. dem Fahrersitz im Vergleich zu Lastenfahrrädern auf ein Minimum reduziert werden.

Die maximale Länge des Fahrzeugs von 2.600mm gewährleistet die im Stadtgebiet erforderliche Wendigkeit und erleichtert die Suche nach einem geeigneten Abstellplatz. Insbesondere ist es auf Grund der Fahrzeuglänge möglich, das Fahrzeug quer zur Fahrtrichtung auf einem am Straßenrand vorgesehen PKW-Parkplatz abzustellen.

Das erfindungsgemäße Fahrzeug unterscheidet sich von herkömmlichen Elektroscootern, Elektrofahrrädern und Lastenfahrrädern dadurch, dass es wenigstens drei Räder aufweist, sodass die Stabilität und die Lastaufnahmefähigkeit wesentlich erhöht sind. Der Antrieb erfolgt hierbei bevorzugt durch wenigstens einen elektrischen Radnabenmotor, was eine platzsparende Anordnung des Antriebsaggregats ermöglicht.

Der Elektromotor, insbesondere Radnabenmotor, kann in herkömmlicher Weise mit einer Motorsteuerung verbunden sein, die vom Fahrerstand aus bedient werden kann. Der Fahrerstand weist zu diesem Zweck bevorzugt eine Lenkvorrichtung, insbesondere einen Lenkerbügel, auf, die bzw. der dem Lenken der lenkbaren Räder des Fahrzeugs dient und geeignete Bedienungselemente für den Antriebsmotor aufweist.

Die Fahrzeugbatterie, welche den Motor mit elektrischer Energie versorgt, kann vorzugsweise am hinteren Ende der Standplattform angeordnet werden, d.h. unmittelbar vor dem Transportcontainer. Die Fahrzeugbatterie kann in platzsparender Weise so angeordnet werden, dass sie dem Fahrer als Sitz oder als Abstützung für den Sitz dient. Hierzu kann ein Sattel oder ein Sitzschale auf dem Gehäuse der Fahrzeugbatterie, insbesondere an der Oberseite des Gehäuses, befestigt sein.

Gemäß einer bevorzugten Ausbildung ist vorgesehen, dass das Fahrzeug eine an der breitesten Stelle gemessene Fahrzeugbreite von kleiner oder gleich 1.000mm aufweist. Dies ermöglich das Befahren von engen Fahrwegen im Stadtverkehr, wie z.B. von Fahrradwegen oder Gehwegen. Das Fahrzeug erlaubt daher eine Anlieferung von Warensendungen bis an die Haustür des Empfängers, sodass die Fußwege des Zustellpersonals und damit die Lieferzeiten minimiert werden können.

Wie bereits erwähnt umfasst das erfindungsgemäße Fahrzeug mindestens drei Räder. Das Fahrzeug kann beispielsweise vier Räder aufweisen, von denen zwei im vorderen Bereich und zwei im hinteren Bereich des Fahrzeugrahmens angebracht sind. Eine bevorzugte Ausbildung sieht jedoch vor, dass das Fahrzeug genau drei Räder aufweist, von denen zwei Räder als lenkbare Vorderräder und ein Rad als mittiges Hinterrad ausgebildet ist, wobei das Hinterrad bevorzugt elektrisch angetrieben ist, insbesondere den Radnabenmotor aufweist. Das Hinterrad ist dabei bevorzugt im hinteren Drittel der Fahrzeuglänge, insbesondere im hinteren Sechstel der Fahrzeuglänge angeordnet. Um die erforderliche geringe Bodenfreiheit sicherzustellen, ist das Hinterrad so angeordnet und gelagert, dass es im oberen Bereich in einen Radkasten ragt, wobei der Radkasten seinerseits in den Laderaum des auf dem Fahrzeugrahmen angeordneten Transportcontainers ragt. Die Achse des Hinterrads ist vorzugsweise am Fahrzeugrahmen drehbar gelagert, zu welchem Zweck der Fahrradrahmen im hinteren Bereich zwei sich in Längsrichtung des Fahrzeugs erstreckende Holme aufweist, zwischen welchen das Hinterrad angeordnet ist und welche die Drehlager für die Hinterradachse tragen.

Eine alternative Ausbildung sieht vor, dass das Fahrzeug genau vier Räder aufweist, von denen zwei Räder als lenkbare Vorderräder und zwei Räder als Hinterräder ausgebildet sind, wobei die Hinterräder bevorzugt elektrisch angetrieben sind, insbesondere jeweils einen Radnabenmotor aufweisen. Die Hinterräder sind dabei bevorzugt im hinteren Drittel der Fahrzeuglänge, insbesondere im hinteren Sechstel der Fahrzeuglänge angeordnet. Um die erforderliche geringe Bodenfreiheit sicherzustellen, sind die Hinterräder so angeordnet und gelagert, dass sie im oberen Bereich in einen jeweiligen Radkasten ragen, wobei der Radkasten seinerseits in den Laderaum des auf dem Fahrzeugrahmen angeordneten Transportcontainers ragt.

Eine besonders effiziente Raumnutzung gelingt gemäß einer bevorzugten Ausführungsform der Erfindung, wenn der Transportcontainer sich über das oder die Hinterräder erstreckt und ein Laderaum des Transportcontainers im Bereich des Hinterrads bzw. der Hinterräder durch wenigstens einen Radkasten verkleinert ist.

Der Elektromotor, insbesondere Radnabenmotor, ist bevorzugt für den Antrieb des Hinterrads angeordnet, sodass das Fahrzeug insgesamt mit nur einem einzigen Motor auskommt. Alternativ können die Vorderräder jeweils einen Radnabenmotor aufweisen.

Für die bodennahe Anordnung des Fahrzugrahmens ist bevorzugt vorgesehen, dass das angetriebene Hinterrad oder alle Räder samt Reifen einen Außendurchmesser von höchstens 500mm, vorzugsweise höchstens 400mm, aufweist bzw. aufweisen. Eine solche, relativ geringe Radgröße hat eine Reihe von Vorteilen, wie z.B. eine höhere Antriebskraft (Drehmoment), die vom Elektromotor, insbesondere Radnabenmotor, auf die Straße gebracht werden kann und eine verbesserte Seitenführung des Fahrzeugs. Der Außendurchmesser der Räder sollte aber auch nicht kleiner als 200mm betragen, da andernfalls ein unruhiges Fahrverhalten zu beobachten wäre und das Überfahren von Stufen, wie z.B. Gehsteigkanten und dgl. erschwert werden würde.

Einer verbesserten Seitenführung des Fahrzeugs kann zusätzlich dadurch bewirkt werden, dass die Räder speichenlos ausgebildet sind und jeweils eine 10- oder 12-Zoll Felge aufweisen. Dabei ist der Radnabenmotor bevorzugt mittels eines Adapterrings an der Felge befestigt. Dadurch, dass der Radnabenmotor gleichsam direkt, d.h. lediglich unter Zwischenordnung eines Adapterrings, mit der Felge zusammenwirkt, kann auf die Anordnung von Speichen verzichtet und somit eine besondere Widerstandsfähigkeit gegen laterale Kräfte erzielt werden. Dies ermöglicht den Transport schwerer Lasten, ohne die Seitenführungseigenschaften des Fahrzeugs zu verschlechtern. Der genannte Adapterring hat hierbei die Funktion, im radial inneren Bereich an den in der Regel vom Hersteller vorgegebenen Verbindungspunkten des Radnabenmotors befestigt und im radial äußeren Bereich mit der Felge verbunden zu werden. Der Adapterring dient somit als starres Verbindungsstück zwischen dem Radnabenmotor und der Felge.

Wie bereits erwähnt, sind die beiden Vorderräder bevorzugt als lenkbare Räder ausgebildet. Die zweispurige lenkbare Ausführung der Vorderachse ermöglicht hierbei ein schnelleres Kurvenfahren, insbesondere auch weil das Gewicht des Fahrers auf Grund der im vorderen Bereich des Fahrzeugrahmens angeordneten, d.h. achsnahen, Standplattform vorwiegend auf die Vorderachse wirkt.

In diesem Zusammenhang kann bevorzugt vorgesehen sein, dass die Vorderräder an einer Vorderachse gelagert sind, die am vorderen Ende des Fahrzeugrahmens angeordnet ist.

Hinsichtlich der Ausbildung des Fahrzeugrahmens sind verschiedene technische Lösungen denkbar. Bevorzugt ist vorgesehen, dass der Rahmen aus einer Mehrzahl von länglichen Trägern besteht. Die Träger können jeweils ein geschlossenes Rohrprofil aufweisen und beispielsweise einen rechteckigen Querschnitt aufweisen. Die Träger können aus Metall, wie z.B. aus Stahl oder Aluminium gebildet sein und z.B. durch Schweißverbindungen miteinander verbunden werden.

Bevorzugt weist der Fahrzeugrahmen eine zum hinteren Fahrzeugende hin zunehmende Breite auf, um eine ausreichende Abstützung des Transportcontainers zu gewährleisten. Bevorzugt ist der Fahrzeugrahmen trapezförmig ausgebildet, wobei ein die schmälere der beiden parallelen Trapezseiten ausbildender Träger die Standplattform trägt und ein die breitere der beiden parallelen Trapezseiten ausbildender Träger an der Fahrzeughinterseite angeordnet ist und den Transportcontainer trägt.

Um eine maximale Raumausnutzung und dadurch ein hohes Ladevolumen zu erreichen, ist der Transportcontainer bevorzugt quaderförmig ausgebildet und umfasst wenigstens eine Tür oder eine Klappe, welche einen Zugang ins Innere des Containers ermöglicht. Bevorzugt weist der Transportcontainer an beiden Fahrzeugseiten jeweils wenigstens eine Tür oder eine Klappe auf, wodurch ein Ent- und Beladen flexibel von beiden Seiten her möglich ist. Die wenigstens eine Tür kann hierbei als Schwenk- oder Schiebetür ausgeführt sein.

Bevorzugt weist der Transportcontainer ein Ladevolumen von mindestens 1.600 Liter, bevorzugt mindestens 1.800 Liter und insbesondere mindestens 2.000 Liter auf. Die Länge des Transportcontainers beträgt vorzugsweise mindestens 1.400mm. Die Breite beträgt vorzugsweise mindestens 800mm, insbesondere mindestens 900mm. Die Höhe des Transportcontainers beträgt vorzugsweise mindestens 1.000mm, insbesondere mindestens 1.400mm. Besonders bevorzugt weist der Transportcontainer Abmessungen von 1.400-1.600mm in der Länge, 800-1.000mm in der Breite und 1.300-1.600mm in der Höhe auf.

Weiters kann bevorzugt vorgesehen sein, dass die Gesamthöhe des Fahrzeugs eischließlich des Transportcontainers höchstens 1.800mm, bevorzugt höchstens 1.700mm, beträgt. Damit lässt sich einerseits ein ausreichend großes Ladevolumen erzielen, andererseits verstellt der Transportcontainer dem Fahrer nicht die Sicht auf die Umgebung.

Bevorzugt weist das Fahrzeug genau vier Räder auf, von denen zwei Räder als lenkbare Vorderräder und zwei Räder als Hinterräder ausgebildet sind, wobei die Hinterräder bevorzugt vom Motor, insbesondere Radnabenmotor, angetrieben sind. Bei dieser Ausführungsform wird durch die beiden Hinterräder eine verbesserte Stabilität gegen Verkippen und eine verbesserte Traktion erreicht.

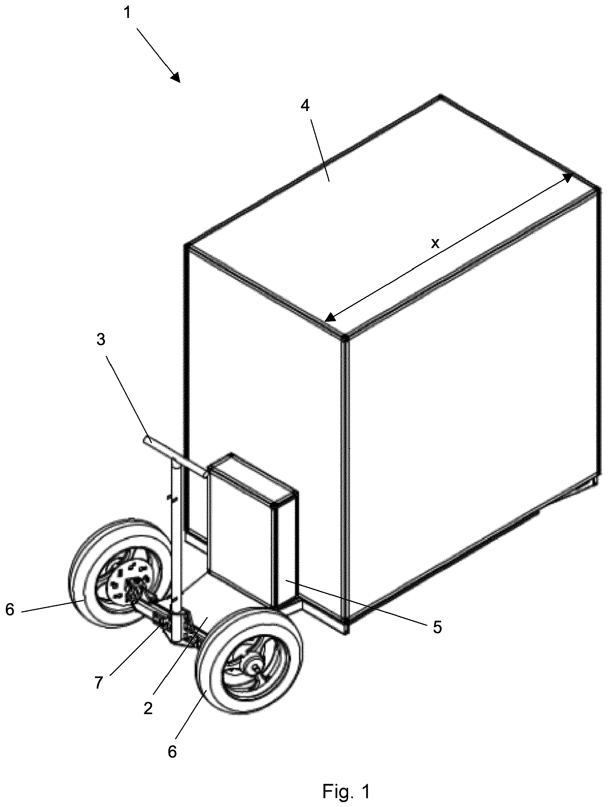

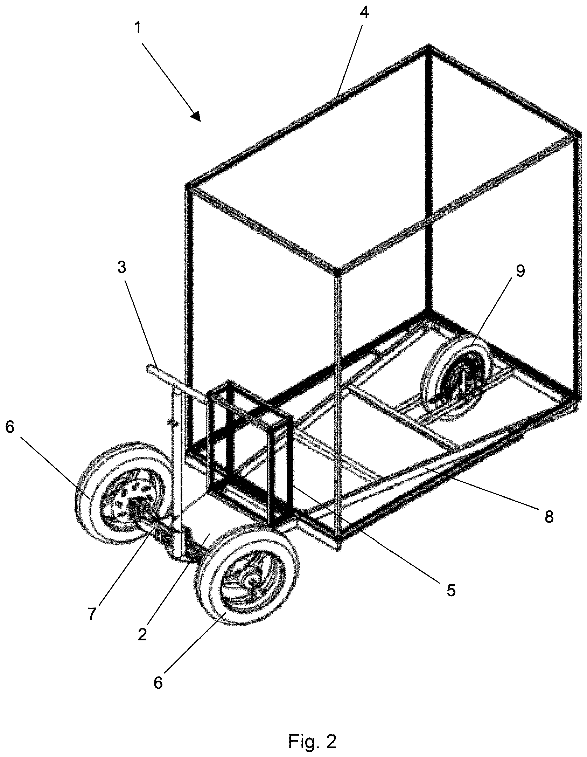

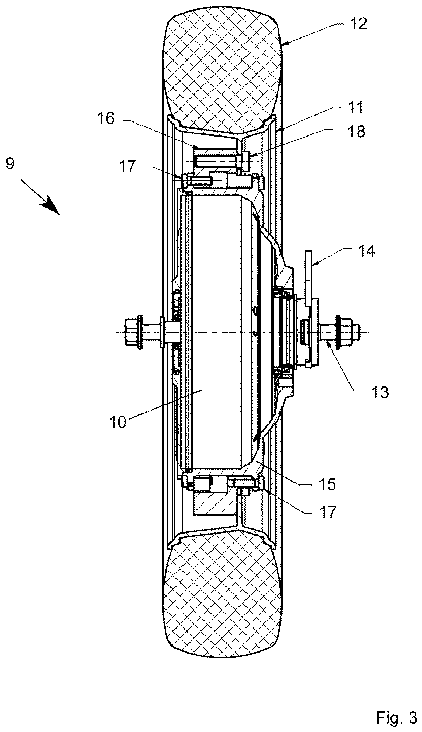

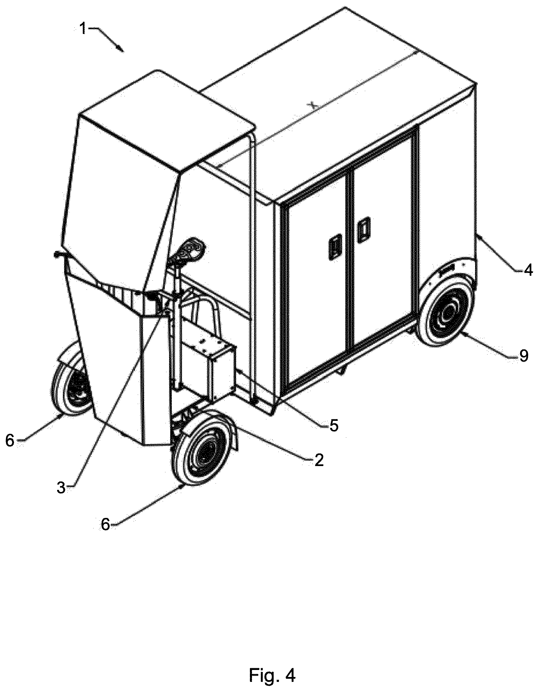

Die Erfindung wird nachfolgend anhand eines in der Zeichnung schematisch dargestellten Ausführungsbeispiels näher erläutert. In dieser zeigen Fig. 1 eine perspektivische Ansicht des Lastenfahrzeugs, Fig. 2 eine Ansicht des Lastenfahrzeugs gemäß Fig. 1 mit transparent dargestelltem Transportcontainer, Fig. 3 einen Querschnitt eines Hinterrads des Lastenfahrzeugs gemäß Fig. 1 und Fig. 4 eine perspektivische Ansicht eines erfindungsgemäßen Lastenfahrzeugs mit vier Rädern.

In Fig. 1 ist ein Lastenfahrzeug 1 dargestellt, das im vorderen Bereich einen Fahrerstand mit einer Standplattform 2 und einem Lenkerbügel 3 und in seinem hinteren Bereich einen Transportcontainer 4 aufweist. Am hinteren Ende der Standplattform 2 ist ein Batteriepack 5 angeordnet, welcher der elektrischen Versorgung eines Radnabenmotors dient. An der Oberseite des Batteriepacks 5 kann ein Sattel oder eine Sitzschale für den Fahrer befestigt werden, sodass der Fahrer das Fahrzeug sowohl in der stehenden als auch in der sitzenden Position fahren kann. Der Radnabenmotor ist an einem mittig angeordneten Hinterrad angeordnet, das in Fig. 1 durch den Transportcontainer 4 verdeckt ist. Vorne umfasst das Fahrzeug 1 zwei lenkbare Vorderräder 6, die an einer am vorderen Bereich des Fahrzeugs 1 angebrachten Vorderachse 7 gelagert sind.

In Fig. 2 ist der Fahrzugrahmen 8 ersichtlich, der sich von der Vorderachse 7 bzw. vom vorderen Ende der Standplattform 2 bis zum hinteren Ende des Fahrzeugs 1 erstreckt und sowohl die Standplattform 2 als auch den Transportcontainer 4 trägt. Weiters ist das im hinteren Bereich mittig angeordnete Hinterrad 9 ersichtlich, das mit einem Radnabenmotor ausgestattet ist. Die Anordnung der Radachsen der Vorderräder 6 und des Hinterrads 9 am Fahrzeugrahmen 8 und die Größe der Räder sind so aufeinander abgestimmt, dass die zwischen dem Fahrzeugrahmen 8 und einer Radaufstandsfläche gemessene Bodenfreiheit höchstens 200mm-250mm beträgt.

Hinsichtlich der Abmessungen des Fahrzeugs 1 in Längsrichtung ist weiters vorgesehen, dass die Gesamtfahrzeuglänge, die vom vordersten Punkt der Vorderräder 6 bis zur Hinterkante des Fahrzeugs 1 samt Transportcontainer 4 gemessen ist, weniger als 2.600mm, bevorzugt weniger als 2.200mm beträgt. Der Transportcontainer 4 hat hierbei eine solche Länge x, dass er wenigstens 50%, bevorzugt wenigstens 60% der Fahrzeuglänge einnimmt.

In Fig. 3 ist das Hinterrad 9 samt Radnabenmotor 10 dargestellt. Das Hinterrad 9 umfasst eine Felge 11 und einen daran angebrachten Reifen 12. Das Hinterrad 9 ist mittels der Lagerachse 13 am Fahrzeugrahmen 8 drehbar gelagert, wobei weiters der Radnabenmotor 10 eine am Fahrzeugrahmen 8 befestigbare Drehmomentstütze 14 aufweist. Der drehbar angetriebene Außenring 15 des Radnabenmotors 10 ist über einen Adapterring 16 an der Felge 11 befestigt. Der Adapterring 16 ist zu diesem Zweck mittels einer Motorverschraubung 17 am Außenring 15 und mittels einer Felgenverschraubung 18 an der Felge 11 drehfest befestigt.

In Fig. 4 ist ein Lastenfahrzeug 1 gemäß der vorliegenden Erfindung dargestellt und es sind gleich oder einander entsprechende Teile mit gleichen Bezugszeichen versehen. Es ist zu erkennen, dass das Lastenfahrzeug 1 anstelle eines einzelnen Hinterrades 9 zwei Hinterräder 9 aufweist.

## Patentansprüche

1. Lastenfahrzeug umfassend
einen Fahrzeugrahmen (8), der in seinem vorderen Bereich einen Fahrerstand mit einer Standplattform (2) und einer Lenkvorrichtung und in seinem hinteren Bereich einen Transportcontainer (4) trägt, und
wenigstens drei Räder (6,9), von denen wenigstens eines von einem elektrischen Motor, vorzugsweise Radnabenmotor (10), angetrieben ist,
**dadurch gekennzeichnet, dass** die zwischen dem Fahrzeugrahmen (8) und einer Radaufstandsfläche gemessene Bodenfreiheit höchstens 250mm, bevorzugt höchstens 200mm, beträgt und
dass die Fahrzeuglänge weniger als 2.600mm, bevorzugt weniger als 2.200mm beträgt und der Transportcontainer (4) wenigstens 50%, bevorzugt wenigstens 60% der Fahrzeuglänge einnimmt.

2. Lastenfahrzeug nach Anspruch 1, **dadurch gekennzeichnet, dass** das Fahrzeug (1) eine Fahrzeugbreite von kleiner oder gleich 1.000mm aufweist.

3. Lastenfahrzeug nach Anspruch 1 oder 2, **dadurch gekennzeichnet, dass** das Fahrzeug (1) genau drei Räder (6,9) aufweist, von denen zwei Räder als lenkbare Vorderräder (6) und ein Rad als mittiges Hinterrad (9) ausgebildet ist, wobei das Hinterrad (9) bevorzugt vom Motor, insbesondere Radnabenmotor (10), angetrieben ist.

4. Lastenfahrzeug nach Anspruch 1 oder 2, **dadurch gekennzeichnet, dass** das Fahrzeug (1) genau vier Räder (6,9) aufweist, von denen zwei Räder als lenkbare Vorderräder (6) und zwei Räder als Hinterräder (9) ausgebildet sind, von denen wenigstens eines von dem elektrischen Motor, vorzugsweise Radnabenmotor (10), angetrieben ist.

5. Lastenfahrzeug nach Anspruch 3 oder 4, **dadurch gekennzeichnet, dass** die Vorderräder (6) an einer Vorderachse (7) gelagert sind, die am vorderen Ende des Fahrzeugrahmens (8) angeordnet ist.

6. Lastenfahrzeug nach einem der Ansprüche 1 bis 5, **dadurch gekennzeichnet, dass** die Räder (6,9) samt Reifen (12) einen Außendurchmesser von höchstens 500mm, vorzugsweise höchstens 400mm, aufweisen.

7. Lastenfahrzeug nach einem der Ansprüche 1 bis 6, **dadurch gekennzeichnet, dass** die Räder (6,9) speichenlos ausgebildet sind und jeweils eine 10- oder 12-Zoll Felge (11) aufweisen.

8. Lastenfahrzeug nach einem der Ansprüche 1 bis 7, **dadurch gekennzeichnet, dass** der Radnabenmotor (10) mittels eines Adapterrings (16) an der Felge (3) befestigt ist.

9. Lastenfahrzeug nach einem der Ansprüche 1 bis 8, **dadurch gekennzeichnet, dass** der Fahrzeugrahmen (8) trapezförmig ausgebildet ist, wobei ein die schmälere der beiden parallelen Trapezseiten ausbildender Träger die Standplattform (2) trägt und ein die breitere der beiden parallelen Trapezseiten ausbildender Träger an der Fahrzeughinterseite angeordnet ist und den Transportcontainer (4) trägt.

10. Lastenfahrzeug nach einem der Ansprüche 1 bis 9, **dadurch gekennzeichnet, dass** sich der Transportcontainer (4) über das oder die Hinterräder (9) erstreckt und ein Laderaum des Transportcontainers (4) im Bereich des Hinterrads (9) bzw. der Hinterräder (9) durch wenigstens einen Radkasten verkleinert ist.
